# EUROPÄISCHE PATENTANMELDUNG

(11) **EP 1 258 286 A1**
(43) Veröffentlichungstag der Anmeldung: **20.11.2002**
(21) Anmeldenummer: 01201813.1
(22) Anmeldetag: 15.05.2001
(51) Int. Cl.: B01J 19/00

(54) **Apparat zur gleichzeitigen durchführung mehrerer katalytischer reaktionen**

(71) Anmelder: Premex Reactor AG, 2543 Lengnou (CH)
(72) Erfinder: Preuss, Klaus, 2543 Lengnou (CH)

(57) **Zusammenfassung**

Ein Apparat zur gleichzeitigen Durchführung mehrerer katalytischer Reaktionen bei erhöhtem Druck und/oder erhöhter Temperatur, der folgendes enthält:
(1) einen druckfesten Behälter,
(2) einen Deckel zum Öffnen und Schließen des Apparates,
(3) eine zentrale Gasversorgung,
(4) einen pneumatischen Zylinder,
(5) Nadelanordnungen,
(6) einen Rührerblock,
(7) einen Heizblock,
der Heizblock (7) enthält Löcher (8), in die mehrere einzelne ersetzbare Reaktionsgefäße gestellt werden können, und eine Anordnung zum Heizen der Reaktionsgefäße, der Rührerblock (6) enthält eine Anzahl von Magneten (10), so viele wie die mögliche Anzahl der ersetzbaren Reaktionsgefäße, die Magneten sind an den Block geschweißt, jeder Magnet ist mit einem Zahnrad (11) verbunden, und die Zahnräder sind mit einem Motor (12) verbunden,

Der Deckel (2) enthält eine Anzahl von Nadelanordnungen (13), so viele wie die mögliche Anzahl der ersetzbaren Reaktionsgefäße, jede Nadelanordnung enthält eine Nadel (14) und eine Einlaßöffnung für Gas (15), eine zentrale Gasversorgung, (3) die die Nadelanordnungen verbindet und über die Nadeln Gas in die Reaktionsgefäße liefert und zum Druckausgleich über einen Nebenauslaß (16) in den ganzen Apparat liefert, und einen pneumatischen Zylinder (4) zum Öffnen und Schließen des Deckels.

## Beschreibung

Die Erfindung bezieht sich auf ein Verfahren zur gleichzeitigen Durchführung mehrerer katalytischer Reaktionen.

Ein derartiger Apparat ist in GB-A-2327754 beschrieben. Diese Veröffentlichung beschreibt einen Argon-Handschuhkasten der 24 identische Reaktionskammern enthält für Fläschchen die Ansätze von lodbenzol, Vinyl-Tributyl-Zinn und Pd/Liganden Katalysator enthalten. Der Umsatz von Styrol wird mittels Gaschromatographie gemessen.

Der Nachteil dieses Apparates ist, daß er nicht verwendet werden kann, um Katalysatoren für eine katalytische Reaktion bei erhöhtem Druck und/oder erhöhter Temperatur zu untersuchen.

Das Ziel der Erfindung ist es, einen Apparat zur gleichzeitigen Durchführung mehrerer katalytischer Reaktionen bei erhöhtem Druck und/oder erhöhter Temperatur anzubieten.

Dieses Ziel wird dadurch erreicht, daß der Apparat folgendes enthält:
- (1): einen druckfesten Behälter,
- (2): einen Deckel zum Öffnen und Schließen des Apparates,
- (3): eine zentrale Gasversorgung,
- (4): einen pneumatischen Zylinder,
- (5): Nadelanordnungen,
- (6): einen Rührerblock,
- (7): einen Heizblock,
der Heizblock (7) enthält Löcher (8), in die mehrere einzelne ersetzbare Reaktionsgefäße gestellt werden können, und eine Anordnung (9)zum Heizen der Reaktionsgefäße, der Rührerblock (6) enthält eine Anzahl von Magneten (10), so viele wie die mögliche Anzahl der ersetzbaren Reaktionsgefäße, die Magneten sind an den Block geschweißt, jeder Magnet ist mit einem Zahnrad (11) verbunden, und die Zahnräder sind mit einem Motor (12) verbunden, der Deckel (2) enthält eine Anzahl von Nadelanordnungen (13), so viele wie die mögliche Anzahl der ersetzbaren Reaktionsgefäße, jede Nadelanordnung enthält eine Nadel (14) und eine Einlaßöffnung für Gas (15), eine zentrale Gasversorgung (3), die die Nadelanordnungen verbindet und über die Nadeln Gas in die Reaktionsgefäße liefert und zum Druckausgleich über einen Nebenauslaß (16) Gas in den ganzen Apparat liefert, und einen pneumatischen Zylinder (4) zum Öffnen und Schließen des Deckels.

Es wurde gefunden, daß der Apparat der Erfindung benutzt werden kann, um gleichzeitig mehrere katalytische Reaktionen bei erhöhtem Druck (bis 10 MPa) und erhöhter Temperatur (bis 240 °C) durchzuführen. Ein Vorteil des Apparates, der Gegenstand der vorliegenden Erfindung ist, ist, daß der Inhalt jedes einzelnen Reaktionsgefäßes wirkungsvoll gerührt wird. Ein weiterer Vorteil ist, daß in den Reaktionsgefäßen und in dem Apparat verschiedene Gase verwendet werden können. Ein weiterer Vorteil ist, daß die Magneten druckfest und wasserstoffdicht ummantelt sind.

Die Erfindung bezieht sich auch auf eine Methode für den Betrieb des Apparates. Die verschiedenen Reaktionsgefäße werden in ein Tablett gestellt, das Löcher an den gleichen Stellen hat wie der Heizblock des Reaktors. Die Reaktionsgefäße werden außerhalb des Apparates mit Reagenzien und dem Magnet gefüllt. Das Tablett wird so in den geöffneten Apparat gestellt, daß alle Löcher des Tabletts auf den Löchern des Heizblockes stehen. Der Deckel mit den Nadelanordnungen wird gesenkt, so daß die Nadeln in das Septum der Reaktionsgefäße gedrückt werden. Der Deckel wird angehoben, wodurch die Reaktionsgefäße vom Tablett abgehoben werden. Das Tablett wird aus dem Reaktor entfernt. Der Apparat wird geschlossen, wodurch die Gefäße in den Heizblock eingeführt werden, der Motor zum Rühren wird eingeschaltet, den Reaktionsgefäßen wird Gas über die Nadeln und dem Reaktor über den Nebenauslaß zugeführt, und die Reaktionsgefäße werden geheizt.

Nach Beendigung der Reaktionen werden die Reaktionsgefäße auf Normaldruck gebracht und aus dem Apparat entfernt, indem der Deckel angehoben wird, wodurch die Reaktionsgefäße aus dem Heizblock herausgehoben werden. Das Tablett wird so in den geöffneten Apparat gestellt, daß alle Löcher des Tabletts auf den Löchern des Heizblockes stehen. Der Deckel wird gesenkt, so daß die Reaktionsgefäße in die Löcher des Tabletts gesetzt werden. Eine kammförmige Platte wird eingeführt, um die Reaktionsgefäße zu halten. Dann wird der Deckel angehoben, so daß die Nadeln aus den Reaktionsgefäßen entfernt werden, und das Tablett mit den Reaktionsgefäßen wird aus dem Reaktor entfernt.

Der Apparat ist vorzugsweise ein Autoklav mit einem Deckel am oberen Ende, der während des Betriebs sicher verschlossen werden kann. Ein Vorteil der Verwendung eines Autoklaven ist, daß ein Autoklav eine Abschirmung enthält, die verhindert, daß Chemikalien der Umgebung ausgesetzt werden, falls Reaktionsgefäße zerbrechen, z.B. wegen eines Unfalls. Der Autoklav wird vorzugsweise mit Klammern verschlossen, die mit EPDM - Ringen abgedichtet sind. Der Autoklav ist vorzugsweise von rechteckiger Form, und vorzugsweise aus Edelstahl, oder Hastelloy, oder jedem anderen druckfesten Material.

Der Deckel enthält Nadelanordnungen. Die Anzahl der Nadelanordnungen ist die gleiche wie die Anzahl der Löcher im Heizblock. Vorzugsweise hat der Deckel eine Anzahl von Streifen mit jeweils einer Anzahl von Nadelanordnungen. Jede Nadelanordnung besteht im wesentlichen aus einer Nadel und einer Einlaßöffnung für Gas. Die Nadeln sind vorzugsweise aus Hastelloy C gemacht.

Im Apparat, der Gegenstand dieser Erfindung ist, können billige, kommerziell erhältliche Fläschchen mit Septumdichtung verwendet werden. Das kann als großer Vorteil angesehen werden, weil es sich um ersetzbare Fläschchen handelt. Dies ist vorteilhaft, weil es nicht nötig ist, die Fläschchen für eine spätere Verwendung zu reinigen, und kein Risiko einer Verunreinigung in späteren Reaktionen besteht. Die Fläschchen sind vorzugsweise aus Glas oder aus chemikalien- und temperaturbeständigem Plastik. Das Septum auf den Flaschen ist aus einem Material, das von den Nadeln durchstochen werden kann, und sich beim Herausziehen der Nadeln wieder dicht verschließt. Das Septum ist vorzugsweise aus Gummi, und zwar am besten aus Teflon®-beschichtetem Gummi. Das Septum der Fläschchen wird mit einer Kappe abgedichtet. Das Septum wird von der Kappe in der Umgebung der Einstichstelle nicht bedeckt. Die Kappe ist z.B. aus Aluminium oder Plastik. Vorzugsweise ist die Kappe aus Aluminium.

Der Apparat, der Gegenstand dieser Erfindung ist, enthält einen Heizblock, in den mehrere einzelne ersetzbare Reaktionsgefäße eingesetzt werden können. Das Tablett, das zum Einbringen der Reaktionsgefäße in den Apparat, und zum Herausnehmen der Reaktionsgefäße aus dem Apparat verwendet wird, hat ebenfalls Löcher, in welche die einzelnen Reaktionsgefäße eingesetzt werden können. Die Anzahl der Löcher in dem Heizblock ist die gleiche wie die der Löcher in dem Tablett. Die Abmessungen des Heizblocks und des Tabletts, und die Positionen der Löcher im Heizblock und im Tablett sind so, daß die Löcher einander entsprechen. Vorzugsweise haben das Tablett und der Heizblock eine Anzahl von Streifen mit je einer Anzahl von Löchern. Ein Vorteil der Verwendung eines Tabletts ist, daß die Reaktionsgefäße außerhalb des Reaktors mit Reagenzien und einem Magnet gefüllt werden können, und daß die Reaktionsgefäße leicht transportiert werden können.

Der Heizblock enthält eine Anordnung zum Beheizen der Reaktionsgefäße. Die Reaktionsgefäße werden mittels einer Doppelmantel-Heizung beheizt. Vorzugsweise enthält der Heizblock Becher, und zwar so viele wie Löcher für Reaktionsgefäße, und erhitztes Öl wird um die Becher herumgepumpt. Es wurde gefunden, daß mit dem Apparat der Erfindung die Reaktionsgefäße ohne signifikante Erwärmung des restlichen Apparates beheizt werden können. Unterhalb der Doppelmantel-Heizung befinden sich rotierende Magnetplatten, die rückseitig durch Zahnräder verbunden sind, und über eine Magnetkupplung druckfest von außen angetrieben werden. Jedes Reaktionsgefäß enthält einen Magneten. Dieser Magnet wird im Reaktionsgefäß durch die rotierenden Magnetplatten bewegt.

## Patentansprüche

1. Ein Apparat zur gleichzeitigen Durchführung mehrerer katalytischer Reaktionen bei erhöhtem Druck und/oder erhöhter Temperatur, der folgendes enthält:
(1) einen druckfesten Behälter,
(2) einen Deckel zum Öffnen und Schließen des Apparates,
(3) eine zentrale Gasversorgung,
(4) einen pneumatischen Zylinder,
(5) Nadelanordnungen,
(6) einen Rührerblock,
(7) einen Heizblock,
der Heizblock (7) enthält Löcher (8), in die mehrere einzelne ersetzbare Reaktionsgefäße gestellt werden können, und eine Anordnung (9) zum Heizen der Reaktionsgefäße,
der Rührerblock (6) enthält eine Anzahl von Magneten (10), so viele wie die mögliche Anzahl der ersetzbaren Reaktionsgefäße, die Magneten sind an den Block geschweißt, jeder Magnet ist mit einem Zahnrad (11) verbunden, und die Zahnräder sind mit einem Motor (12) verbunden, der Deckel (2) enthält eine Anzahl von Nadelanordnungen (13), so viele wie die mögliche Anzahl der ersetzbaren Reaktionsgefäße, jede Nadelanordnung enthält eine Nadel (14) und eine Einlaßöffnung für Gas (15), eine zentrale Gasversorgung, (3) die die Nadelanordnungen verbindet und über die Nadeln Gas in die Reaktionsgefäße liefert und zum Druckausgleich über einen Nebenauslaß (16) in den ganzen Apparat liefert, und einen pneumatischen Zylinder (4) zum Öffnen und Schließen des Deckels.

2. Ein Apparat nach Anspruch 1, bei dem der Apparat ein Autoklav aus Edelstahl oder Hastelloy oder jedem anderen druckfesten Material ist.

3. Ein Apparat nach Anspruch 2, bei dem der Autoklav eine rechteckige Form hat.

4. Ein Apparat nach irgendeinem der Ansprüche 1-3, bei dem jedes einzelne ersetzbare Reaktionsgefäß einen Magnet enthält.

5. Ein Apparat nach irgendeinem der Ansprüche 1-4, bei dem die Reaktionsgefäße Fläschchen aus Glas sind, die mit einem Septum und einer Kappe verschlossen werden.

6. Ein Apparat nach Anspruch 5, wobei das Septum aus einem Material ist, das von den Nadeln durchstochen werden kann, und sich beim Herausziehen der Nadeln wieder dicht verschließen kann.

7. Ein Apparat nach den Ansprüchen 1-6, wobei der Block eine Anzahl von Streifen mit einer Anzahl von Löchern enthält, in die ersetzbare Reaktionsgefäße eingesetzt werden können.

8. Ein Apparat nach irgendeinem der Ansprüche 2-7, bei dem der Motor außerhalb des Autoclaven angeordnet ist.

9. Ein Apparat nach irgendeinem der Ansprüche 1-8, bei dem das Heizmittel für die Reaktionsgefäße erhitztes Öl ist.

10. Methode zum Bedienen eines Apparates nach irgendeinem der Ansprüche 1-9, wobei die Reaktionsgefäße in ein Tablett gestellt werden, das Löcher an den gleichen Stellen enthält wie die Löcher in dem Heizblock, die Reaktionsgefäße außerhalb des Reaktors mit Reagenzien und dem Magneten gefüllt werden, das Tablett in den Apparat gestellt wird, so daß alle Löcher des Tabletts auf den Löchern des Heizblockes liegen, der Deckel mit den Nadelanordnungen gesenkt wird, so daß die Nadeln in das Septum der Reaktionsgefäße gedrückt werden, der Deckel angehoben wird, wodurch die Reaktionsgefäße vom Tablett abgehoben werden, das Tablett aus dem Reaktor entfernt wird, der Apparat geschlossen wird, wodurch die Gefäße in den Heizblock eingebracht werden, der Motor zum Rühren angeschaltet wird, den Reaktionsgefäßen Gas über die Nadelanordnungen und dem Reaktor über den Nebenauslaß zugeführt wird, und die Reaktionsgefäße beheizt werden.

11. Methode nach Anspruch 10, bei welcher die Reaktionsgefäße auf Normaldruck gebracht werden und aus dem Apparat entfernt werden indem der Deckel angehoben wird, wodurch die Reaktionsgefäße aus dem Heizblock herausgehoben werden, das Tablett in den geöffneten Apparat gestellt wird, so daß alle Löcher des Tabletts über den Löchern des Heizblocks liegen, der Deckel gesenkt wird, so daß die Reaktionsgefäße in die Löcher des Tabletts gesetzt werden, eine kammförmige Platte eingesetzt wird, der Deckel angehoben wird, so daß die Nadeln aus den Reaktionsgefäßen entfernt werden, und das Tablett mit den Reaktionsgefäßen aus dem Apparat entfernt wird.
